# EUROPÄISCHE PATENTANMELDUNG

(11) **EP 1 279 551 A2**
(43) Veröffentlichungstag der Anmeldung: **29.01.2003**
(21) Anmeldenummer: 02015091.8
(22) Anmeldetag: 05.07.2002
(51) Int. Cl.: B60M 1/24

(54) **Abzughalter für ein Oberleitungskettenwerk**

(30) Priorität: 23.07.2001 DE 20112153 U
(71) Anmelder: SIEMENS AKTIENGESELLSCHAFT, 80333 München (DE)
(72) Erfinder: Weber, Michael, 91452 Wilhermsdorf (DE)

(57) **Zusammenfassung**

Die Erfindung betrifft einen Abzughalter (1) mit einer Öse (5) zur Aufnahme einer Klaue (6) eines Seitenhalter-Gelenkhakens (4) für ein Oberleitungskettenwerk. Es ist vorgesehen, dass die Form des Öffnungsquerschnitts der Öse (5) der Querschnittsform des im montierten Zustand in der Öse (5) sich befindenden Teilstücks der Klaue (6) entspricht oder diese nur geringfügig übertrifft. Die Querschnittsform eines ringförmigen Teils (9) der Öse (5) entspricht der Form des Öffnungsquerschnitts der Klaue (6) oder ist nur geringfügig kleiner als diese.

## Beschreibung

Die Erfindung betrifft einen Abzughalter mit einer Öse zur Aufnahme einer Klaue eines Seitenhalter-Gelenkhakens für ein Oberleitungskettenwerk.

Kombinationen aus Abzughalter und Seitenhalter-Gelenkhaken sind bekannt. Während der Abzughalter über ein Stützrohr mit einem Ausleger verbunden ist, steht der Seitenhalter-Gelenkhaken mit dem Oberleitungskettenwerk in Verbindung. Bewegungen des Kettenwerks, die z.B. durch vorbeifahrende Züge, aber auch durch Seitenwind verursacht sein können, führen dazu, dass sich der Gelenkhaken relativ zum Abzughalter bewegt.

Bei bekannten Abzughaltern kommt es infolge mechanischer Reibung relativ schnell zu einem Verschleiß am Gelenkhaken oder auch am Abzughalter.

Bisher war es üblich, die gesamten Seitenhalter sehr oft, noch bevor es zu einer Beschädigung kommen konnte, auszutauschen. Es ist auch schon vorgeschlagen worden, Windsicherungen und Stabilisierungselemente in ein Oberleitungskettenwerk einzubauen, um den Verschleiß am Abzughalter und am Seitenhalter zu begrenzen. Es hat sich aber herausgestellt, dass trotz dieser zusätzlichen Bauteile der Verschleiß nicht vermindert wurde.

Der Erfindung liegt die Aufgabe zugrunde, einen Abzughalter anzugeben, der in Verbindung mit dem Seitenhalter-Gelenkhaken ohne zusätzliche Bauteile auskommt und trotzdem nur einem sehr geringen Verschleiß unterliegt. Ein Austausch der Seitenhalter-Gelenkhaken soll nur in deutlich längeren zeitlichen Abständen als bisher erforderlich werden.

Die Aufgabe wird gemäß der Erfindung dadurch gelöst, dass die Form des Öffnungsquerschnitts der Öse der Querschnittsform des im montierten Zustand in der Öse sich befindenden Teilstücks der Klaue entspricht oder diese geringfügig übertrifft und dass die Querschnittsform eines ringförmigen Teils der Öse der Form des Öffnungsquerschnitts der Klaue entspricht oder nur geringfügig kleiner als diese ist.

Mit diesem Abzughalter wird der Vorteil erzielt, dass der Gelenkhaken im montierten Zustand weitgehend formschlüssig mit dem Abzughalter verbunden ist, so dass es fast zu keinen Relativbewegungen zwischen Abzughalter und Seitenhalter-Gelenkhaken kommen kann. Folglich ist ein Verschleiß am Gelenkhaken und auch an der Öse soweit eingeschränkt, dass ein Austausch des Seitenhalters oder des Abzughalters nur ca alle 30 Jahre notwendig wird.

Beispielsweise ist der ringförmige Teil der Öse um mehr als die Hälfte seines Umgangs von der Klaue umgreifbar und weist einen dünnen Abschnitt auf, dessen Dicke maximal gleich groß ist wie die Öffnung der Klaue.

Die Klaue kann also nur im Bereich des dünnen Abschnitts der Öse über den ringförmigen Teil geschoben und in die Öse eingehakt werden. Danach kann die Klaue auf dem ringförmigen Teil der Öse verschoben und gedreht werden, bis der Seitenhalter die gewünschte Position relativ zum Abzugshalter einnimmt.

Der dünne Abschnitt am ringförmigen Teil der Öse ist so positioniert, dass die Klaue infolge von im üblichen Betrieb vorkommenden Bewegungen nicht von der Öse gelöst werden kann. Der Seitenhalter müsste zum Ablösen um 180° nach unten gekippt und um 90° zur Seite gedreht werden, was im montierten Zustand nicht möglich ist.

Die Öse ist beispielsweise aus einer Anformung mit halbzylinderförmiger Ausnehmung zur Aufnahme der Rückseite der Klaue und aus dem mit der Anformung verbundenen ringförmigen Teil gebildet.

Hiermit wird der Vorteil erzielt, dass die Öse und die Klaue im Betriebszustand mit minimalem Spiel einander zugeordnet sind. Ein Verschleiß durch Relativbewegungen zwischen Seitenhalter und Abzughalter ist weitgehend ausgeschlossen.

Mit dem Abzughalter nach der Erfindung wird insbesondere der Vorteil erzielt, dass durch vorbeifahrende Züge oder durch Windeinwirkungen verursachte Relativbewegungen zwischen dem Seitenhalter und dem Abzughalter nur dazu führen können, dass die Klaue des Seitenhalter-Gelenkhakens auf der Öse geschoben und gedreht wird. Es kann nicht zu ruckartigen Relativbewegungen kommen, durch die Klaue und Öse aneinanderschlagen und dadurch verschleißen würden. Es kommt nicht zu gradlinigen Relativbewegungen zwischen Klaue und Öse, die einen unschädlichen fertigungsbedingten Minimalwert überschreiten würden.

Ein Ausführungsbeispiel für einen Abzughalter nach der Erfindung wird anhand der Zeichnung näher erläutert:
- FIG 1: zeigt einen Abzughalter nach der Erfindung zusammen mit einem Seitenhalter-Gelenkhaken in der Position des üblichen Betriebszustandes;
- FIG 2: zeigt einen senkrechten Schnitt durch die Öse des Abzughalters.

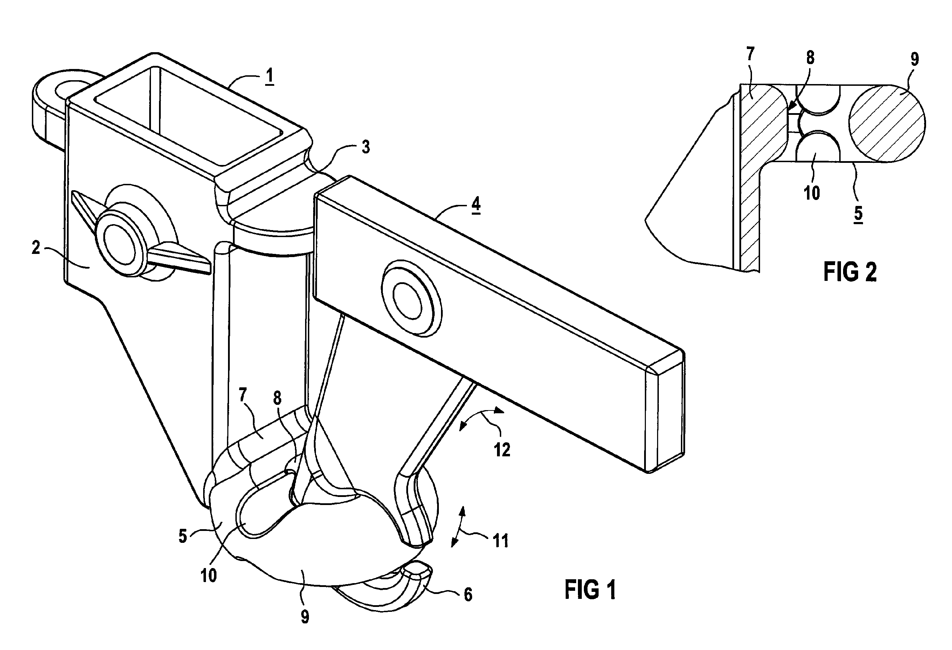

Der Abzughalter 1 nach Figur 1 besteht aus einem Hauptkörper 2, der über ein Stützrohr mit einem Ausleger verbunden werden kann. Im oberen Abschnitt des Hauptkörpers 2 befindet sich ein Begrenzungskörper 3 zur Aufnahme von Stössen eines Seitenhalter-Gelenkhakens 4. Im unteren Abschnitt des Abzughalters 1 befindet sich eine mit ihm verbunde Öse 5, in die im montierten Zustand eine Klaue 6 des Seitenhalter-Gelenkhakens 4 eingreift.

Die Öse 5 besteht aus einer Anformung 7 am Hauptkörper 2, die eine halbzylinderförmige Ausnehmung 8 aufweist, und aus einem mit der Anformung verbundenen ringförmigen Teil 9 mit kreisförmigem Querschnitt.

Der ringförmige Teil 9 weist 90° von der mittleren Position der Klaue 6 entfernt einen dünnen Abschnitt 10 mit reduzierter Dicke auf.

Der Querschnitt des ringförmigen Teils 9 der Öse 5 entspricht hinsichtlich der Größe und der Form weitgehend dem Öffnungsquerschnitt der Klaue 6, so dass die Klaue 6 im montierten Zustand in Richtung des Ösenradius nur sehr wenig Spiel hat. Diese stabile verschleißfreie Halterung mit wenig Spiel in radialer Richtung relativ zur Öse 5 wird dadurch noch unterstützt, dass die halbzylinderförmige Ausnehmung 8 der Öse 5 so geformt ist, dass sie die Rückseite der Klaue 6 weitgehend formschlüssig aufnehmen kann.

Die Positionierung der Klaue 6 an der Öse 5 ohne radiales Spiel ist dadurch noch weiter verbessert, dass die Klaue 6 das ringförmige Teil 9 der Öse 5 um mehr als die Hälfte seines Umfangs umgreift. Um den Seitenhalter-Gelenkhaken 4 mit dem Abzughalter 1 in Verbindung zu bringen oder ihn vom Abzughalter 1 zu lösen, ist der bereits genannte dünne Abschnitt 10 der Öse 5 vorgesehen.

Zum Entfernen des Seitenhalter-Gelenkhakens 4 muss dieser gemäß Figur 1 zuerst um 180° vom Begrenzungskörper 3 weg gekippt werden und muss dann durch Verschieben der Klaue 6 auf der Öse 5 um 90° in Uhrzeigerrichtung so positioniert werden, dass die Klaue 6 den dünnen Abschnitt 10 der Öse 5 erreicht. Erst dort kann der Seitenhalter-Gelenkhaken 4 vom Abzughalter 1 gelöst werden. Die Montage erfolgt entsprechend in umgekehrter Reihenfolge. Hiermit wird deutlich, dass sich der Seitenhalter-Gelenkhaken 4 im Betrieb durch Erschütterungen nicht vom Abzughalter 1 lösen kann. Insbesondere kommt es durch die Form der Öse 5 in Verbindung mit der Form der Klaue 6 nicht zu radialen Bewegungen relativ zur Öse 5, wodurch ein verschleißbedingter Austausch des Seitenhalter-Gelenkhakens 4 oder sogar des Abzughalters 1 nur ca. alle 30 Jahre notwendig wird. Trotzdem kann der Seitenhalter-Gelenkhaken 4 und damit das Oberleitungskettenwerk relativ zum Abzughalter 1 in zwei Freiheitsgraden bewegt werden, wodurch alle Einwirkungen durch Wind oder durch vorbeifahrende Züge ohne Schäden kompensiert werden.

Der erste Freiheitsgrad 11 ist eine Bewegung der Klaue 6 entlang des ringförmigen Teils 9 der Öse 5. Der zweite Freiheitsgrad 12 ist eine Drehung des Seitenhalter-Gelenkhakens 4 um den Mittelpunkt der Klaue 6, wobei sich die Klaue 6 auf einer Umfangslinie der Öse 5 bewegt. Diese Bewegung wird durch den Begrenzungskörper 3, der am Abzughalter 1 angeformt ist, begrenzt.

Figur 2 zeigt einen Schnitt durch die Öse 5 am Abzughalter 1. Die Anformung 7 ist zum Inneren der Öse 5 hin wie das Innere eines halben Zylinders geformt. Der Querschnitt des ringförmigen Teils 9 ist ein Kreis. Die Anformung 7 und das ringförmige Teil 9 sind einstückig miteinander verbunden. Der dünnere Abschnitt 10 der Öse 5 ist schematisch dargestellt.

## Patentansprüche

1. Abzughalter (1) mit einer Öse (5) zur Aufnahme einer Klaue (6) eines Seitenhalter-Gelenkhakens (4) für ein Oberleitungskettenwerk,
**dadurch gekennzeichnet, dass** die Form des Öffnungsquerschnitts der Öse (5) der Querschnittsform des im montierten Zustand in der Öse (5) sich befindenden Teilstücks der Klaue (6) entspricht oder diese geringfügig übertrifft und dass die Querschnittsform eines ringförmigen Teils (9) der Öse (5) der Form des Öffnungsquerschnitts der Klaue (6) entspricht oder nur geringfügig kleiner als diese ist.

2. Abzughalter (1) nach Anspruch 1,
**dadurch gekennzeichnet, dass** der ringförmige Teil (9) der Öse (5) um mehr als die Hälfte seines Umfangs von der Klaue (6) umgreifbar ist und dass das ringförmige Teil (9) einen dünnen Abschnitt (10) aufweist, dessen Dicke maximal gleich groß ist wie die Öffnung der Klaue (6).

3. Abzughalter (1) nach einem der Ansprüche 1 oder 2,
**dadurch gekennzeichnet, dass** die Öse (5) gebildet ist aus einer Anformung (7) mit halbzylinderförmiger Ausnehmung (8) zur Aufnahme der Rückseite der Klaue (6) und aus dem mit der Anformung (7) verbundenen ringförmigen Teil (9).
